# EUROPEAN PATENT APPLICATION

(11) **EP 2 221 205 A1**
(43) Date of publication of application: **25.08.2010**
(21) Application number: 09153178.0
(22) Date of filing: 19.02.2009
(51) Int. Cl.: B60K 11/02, B62J 6/06, B62K 11/02, B62K 11/12, B62K 15/00, B62K 23/02

(54) **Bicycle with two operation molds**

(71) Applicant: Laing Ban International Inc., Sinjhuang City, Taipei County 242 (TW)
(72) Inventor: Huang, Wen-Hung, 220, Taipei County (TW)
(74) Representative: Dossmann, Gérard

(57) **Abstract**

A bicycle includes planet gear set in the rear wheel and cranks are connected tot eh planet gear set to drive the bicycle. A motor is located in the front wheel so as to drive the front wheel so that the bicycle can be operated in two different ways. The front and rear wheels each have magnets which are cooperated with induction members so that when the wheels rotate, the change of magnetic field generates power for the motor. The top tube of the bicycle includes multiple joints which allow the bicycle to be folded into a compact size.

## Description

The present invention relates to a bicycle, and more particularly, to a foldable bicycle which is able to be operated manually or electrically.

A conventional bicycle generally includes a transmission mechanism which includes cranks, a driving wheel, a passive gear, and a chain which is connected between the driving wheel and the passive gear. The driving wheel is co-axially connected to the bottom bracket and the passive gear is co-axially connected to the rear wheel axle. When the user rotates the cranks, the driving wheel drives the chain which rotates the passive gear so that the rear wheel rotates to move the bicycle. Generally, the driving wheel has more teeth than that of the passive gear and this makes the user has to apply a significant force to rotate the passive gear.

Another bicycle is equipped with a motor which replaces the cranks to drive the bicycle. Nevertheless, the motor has fixed power, this means that the bicycle is driven by a constant speed and torque. When the bicycle goes uphill, the fixed power cannot provide more torque and the speed of the bicycle slows down. When the bicycle goes downhill, the fixed power cannot control the speed and the speed of the bicycle accelerates.

The power for the motor is provided by a battery which has to be charged from outside and the battery is bulky and occupies a lot of space. For a long distance travel, the user has to charge the battery frequently.

The present invention intends to provide a bicycle with two operation molds which are operate the bicycle manually and electrically, wherein the power for the motor can be self-generated during riding.

The present invention relates to a bicycle which comprises a rear wheel driving device including a planet gear set located in the rear wheel and the planet gear set includes a sun gear and multiple planet gears. The sun gear is connected to a rear wheel axle which is connected to a driving gear on the bottom bracket. Two cranks are connected to the driving gear so as to operate the driving gear. The planet gears are engaged between the sun gear and a first ring gear. The first ring gear is connected to the rear wheel and drives the rear wheel.

A front wheel driving device is received in the front wheel and includes a motor whose axis is perpendicular to a front wheel axle. The motor includes an output shaft and a driving gear on two ends thereof wherein the driving gear is connected with two second ring gears located on two sides of the motor, and the second ring gears are connected to the front wheel and driving the front wheel.

A speed control mechanism includes a speed controller, a PC box and a counter, wherein the speed controller is connected to the handlebar and includes a lever which controls the variable resistances, the indication lights and the circuit board. The PC box is connected to a front end of the top tube and includes a PC control system which is connected with the circuit board and the counter. The counter is located in the front wheel and corresponding to the output shaft of the motor.

A generating and storage device includes two generating devices, a charging device, an adaptor and a battery. The generating device is connected to the front wheel and the rear wheel. Each generating device includes magnets which are arranged in radial direction. Two pairs of induction members are connected to the front fork and the seat stay respectively, and located corresponding to the magnets. The induction members are connected to the charging device. The charging device and the adaptor are located within a mediate portion of the top tube. The charging device further includes a switch and a plug, the battery is electrically connected to the motor. The top tube includes multiple joints so that the top tube can be folded to reduce the space that the bicycle occupies.

The primary object of the present invention is to provide a bicycle which can be operated manually or electrically, wherein the power that the motor needs can be self-generated when the bicycle is moving.

The present invention will become more obvious from the following description when taken in connection with the accompanying drawings which show, for purposes of illustration only, a preferred embodiment in accordance with the present invention.
Fig. 1 is a perspective view to show the bicycle of the present invention;
Fig. 2 is a side view of the bicycle of the present invention;
Fig. 3 is an exploded view to show the rear wheel driving device of the bicycle of the present invention;
Fig. 4 is an exploded view to show the front wheel driving device of the bicycle of the present invention;
Fig. 5 is an exploded view to show the speed control mechanism of the bicycle of the present invention;
Fig. 6 shows the rear wheel driving device of the bicycle of the present invention;
Fig. 7 shows the front wheel driving device of the bicycle of the present invention;
Fig. 8 illustrates the speed control mechanism of the bicycle of the present invention;
Fig. 9 illustrates the generating device of the bicycle of the present invention;
Fig. 10 shows the bicycle in folded status, and
Fig. 11 shows that the bicycle is controlled by wire-less control feature.

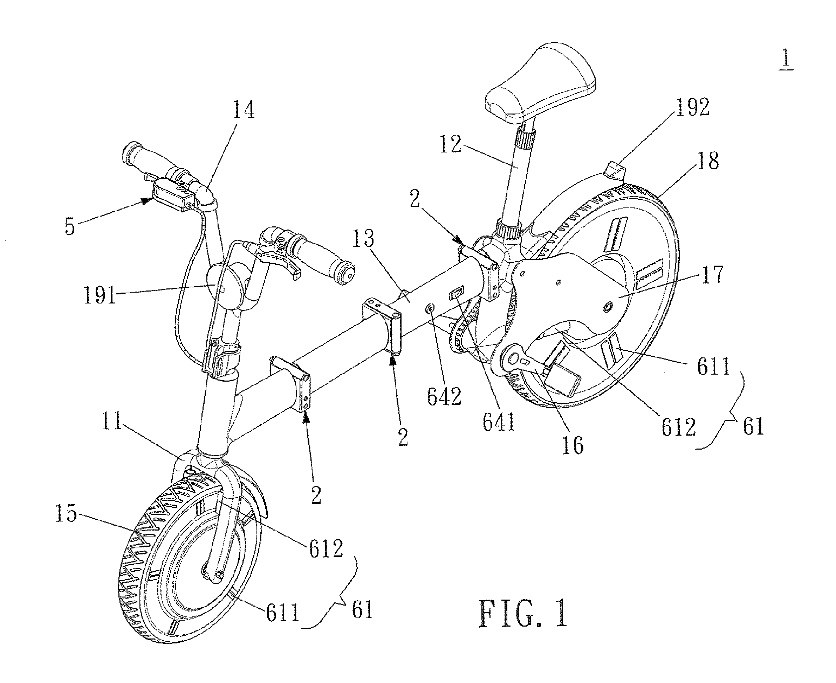

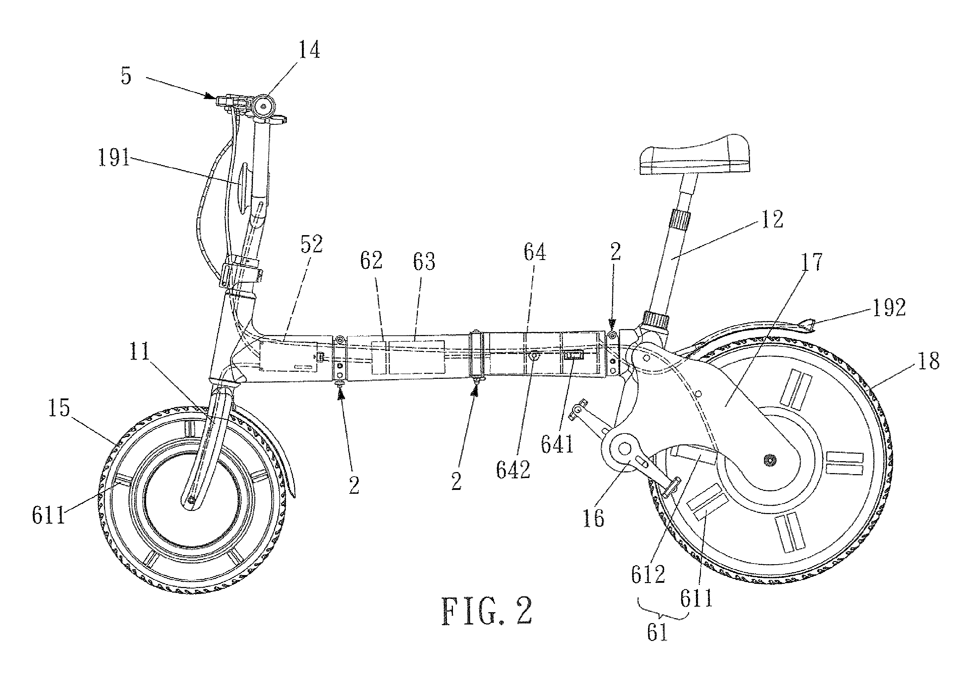

Referring to Figs. 1 and 2, the bicycle 1 of the present invention comprises a front fork 11 with a front wheel 15 connected thereto and a handlebar 14 is connected to a top of the front fork 11. A top tube 13 is connected between the front fork 11 and a seat tube in which a seat post 12 is inserted. A seat is connected to the seat post 12. A seat stay 17 is connected to the seat tube and a rear wheel 18 is connected to the seat stay 17. The seat tube is connected to a bottom bracket and two cranks 16 are connected to the axle of the bottom bracket. Multiple joints 2 are connected to the top tube 13 which is foldable at the joints 2.

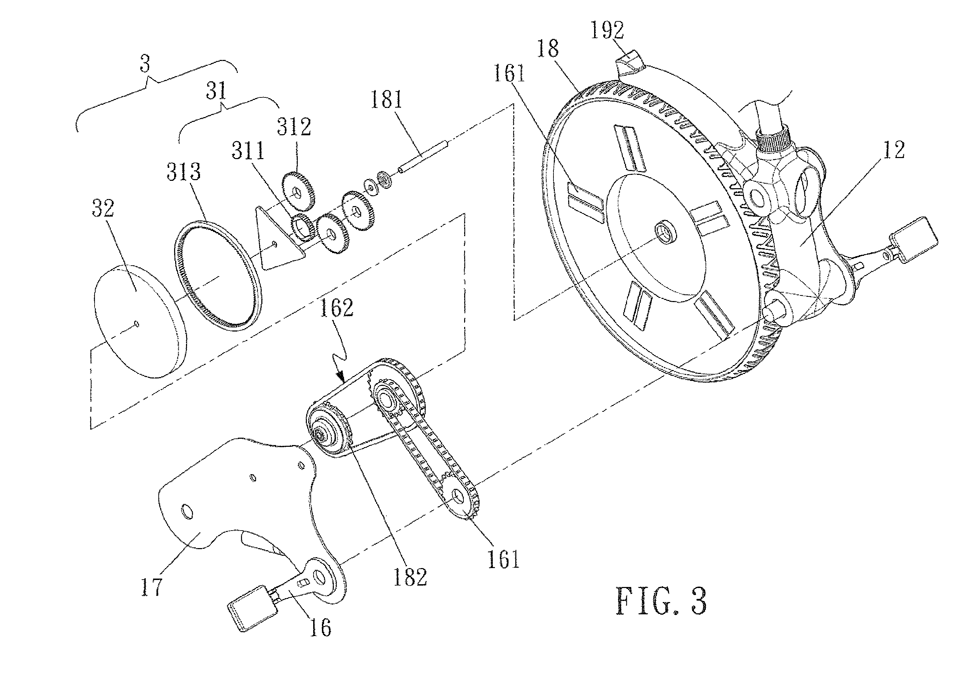

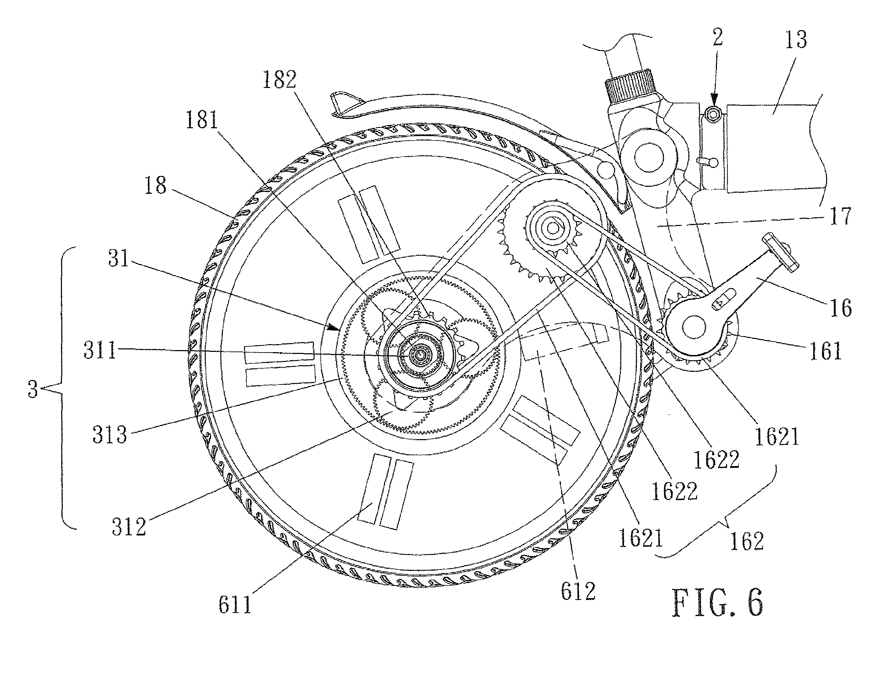

Referring to Figs. 3 and 6, a rear wheel driving device 3 includes a planet gear set 31 which is located in the rear wheel 18 and includes a sun gear 311 and multiple planet gears 312. The sun gear 311 is connected to a rear wheel axle 181 which is connected to a driving gear 161 on the bottom bracket. The two cranks 16 are connected to the driving gear 161 which is connected with a transmission device 162 which drives a passive gear 182 on the rear wheel axle 181 of the rear wheel 18. The planet gears 312 are engaged between the sun gear 311 and a first ring gear 313 which is connected to the rear wheel 18 and drives the rear wheel 18. A cover 32 is used to cover the sun gear 311, the planet gears 312 and the first ring gear 313. The transmission device 162 includes a transmission belt 1621 and transmission gears 1622 so that when the user rotates the cranks 16, the force can be transferred to the rear wheel 18.

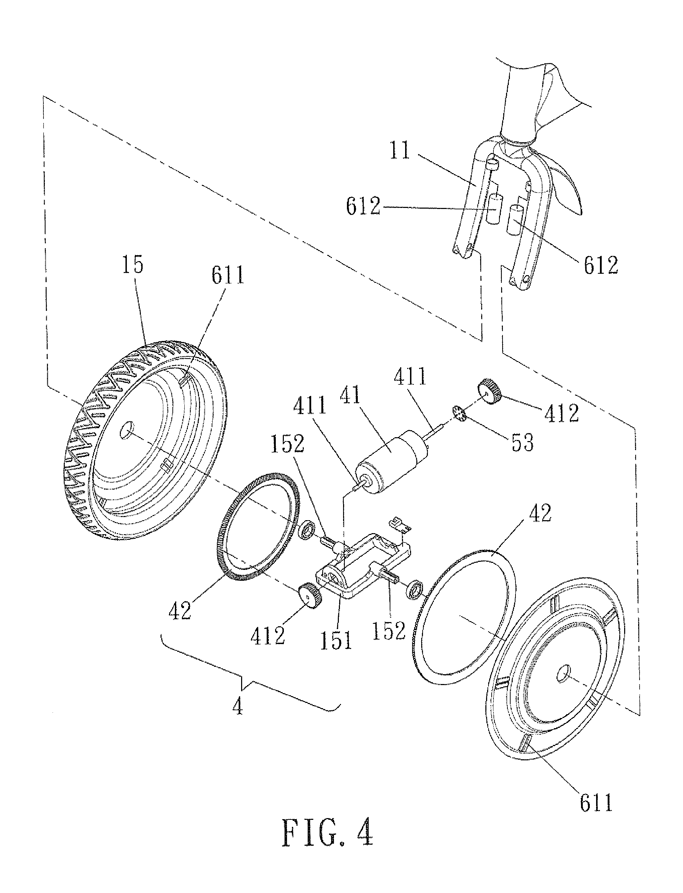

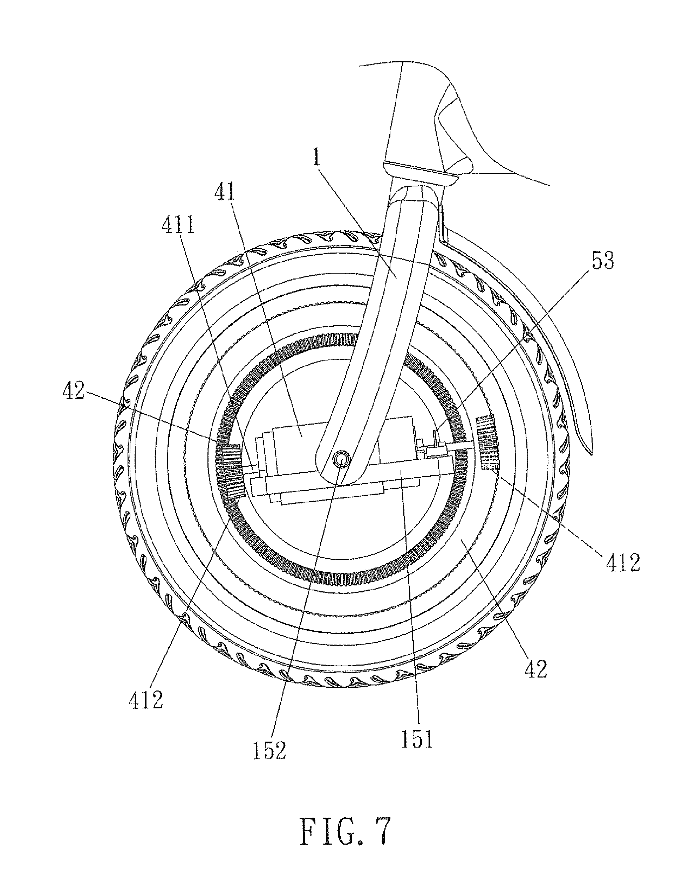

Referring to Figs. 4 and 7, a front wheel driving device 4 is received in the front wheel 15 and includes a motor 41 whose axis is perpendicular to a front wheel axle 152. The front wheel axle 152 includes two sections which extend from two sides of a rectangular frame 151. An output shaft 411 and a driving gear 412 extend from two ends of the motor 41, wherein the driving gear 412 is connected with two second ring gears 42 located on two sides of the motor 41, and the second ring gears 42 are connected to the front wheel 15 so as to drive the front wheel 15.

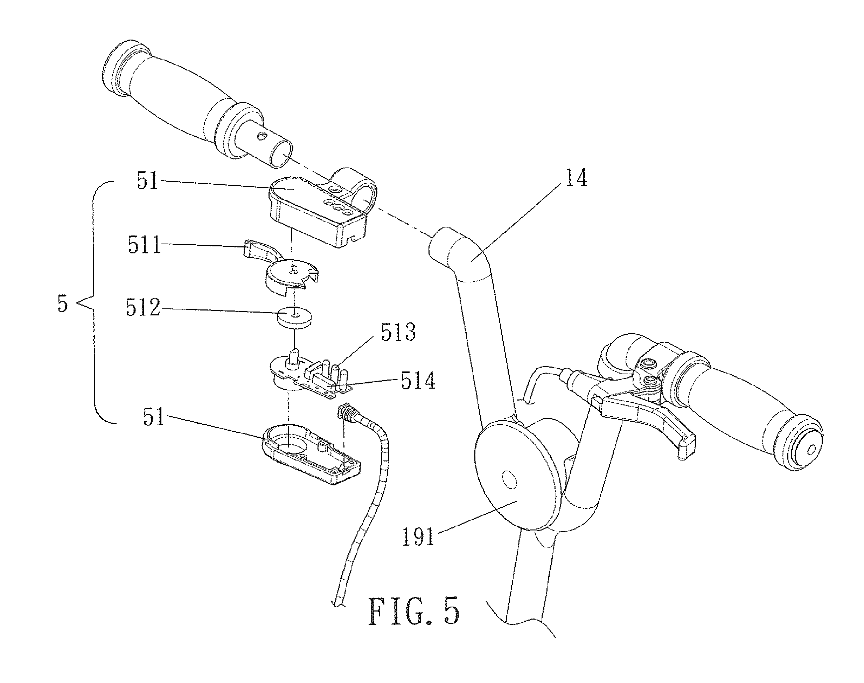

Referring to Fig. 5, a speed control mechanism 5 is connected to the handlebar 14 and includes a speed controller 51, a PC box 52 and a counter 53. The speed controller 51 includes a lever 511 which controls variable resistances 512, indication lights 513 such as LEDs and a circuit board 514. The PC box 52 is connected to a front end of the top tube 13 and includes a PC control system (not shown) which is connected with the circuit board 514 and the counter 53, the counter 53 which is located in the front wheel 15 and corresponding to the output shaft 411 of the motor 41.

A generating and storage device includes two generating devices 61, a charging device 62, an adaptor 63 and a battery 64, wherein the generating devices 61 is connected to the front wheel 15 and the rear wheel 18. Each generating device 61 includes magnets 611 arranged in radial direction. Two pairs of induction members 612 are connected to the front fork 11 and the seat stay 17 respectively, and located corresponding to the magnets 611. The induction members 612 are connected to the charging device 62, wherein the charging device 62 and the adaptor 63 are located within a mediate portion of the top tube 13 as shown in Fig. 2. The generating and storage device includes a switch 641 and a plug 642. The battery 64 is electrically connected to the motor 41. A front light 191 and a rear light 192 are connected to a front end and a rear end of the bicycle 1 respectively. The front light 191 and the rear light 192 are connected with the battery 64.

When the user operate the bicycle 1 by the manual mold as shown in Fig. 6, he or she treads the cranks 16 to drive the driving gear 161 and the power is transferred to the passive gear 182 and the rear wheel axle 181 by the transmission device 162, the rear wheel axle 181 drives the sub gear 311 which drives the planet gears 182 and the first ring gear 313. The first ring gear 313 drives the rear wheel 18 to move the bicycle 1.

When the user operate the bicycle 1 by the electrical mold as shown in Fig. 7, the switch 641 has to be activated to "ON" position and the battery 64 provides power to the motor 41. The output shaft 411 of the motor 41 drives the driving gear 412 and the second ring gear 42, such that the second ring gear 42 drives the front wheel 15.

When the bicycle 1 is operated by the electrical mold, the speed control mechanism 5 is activated and the counter 53 counts the revolutions of the output shaft 411 and detects the speed of the motor 41. By the PC control system in the PC box 52, the speed of the bicycle 1 can be controlled in different road conditions.

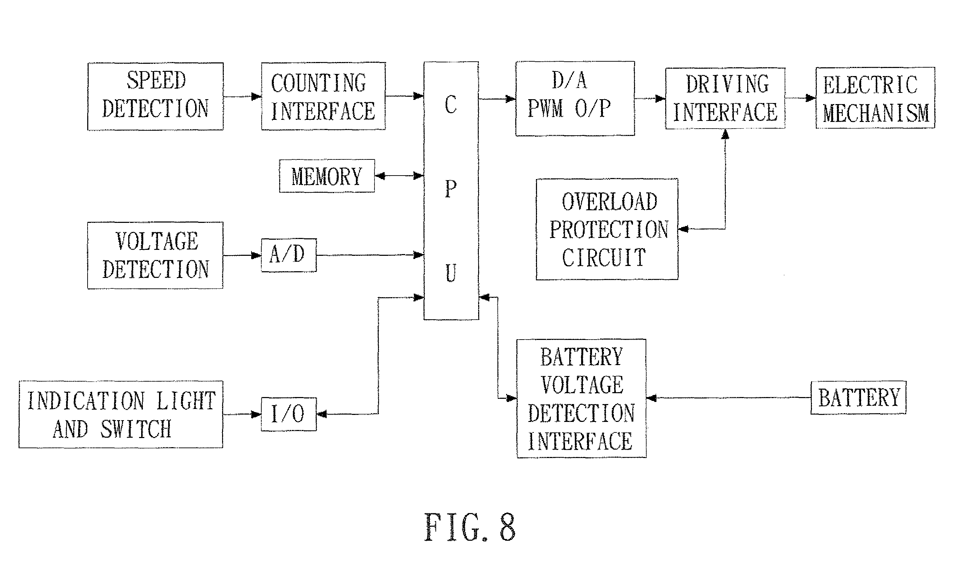

The lever 511 can be switched to control the variable resistance 512 in the speed controller 51 as shown in Fig. 5. The block diagram of the PC control system is disclosed in Fig. 8. The power is transferred by an A/D interface from analog signals into digital signals which are sent to the CPU which sets the speed. In the meanwhile, the CPU transfers the digital signals into analog signals by the A/D interface, and sent to the control interface by the way of PWN to activate the motor 41. The output voltage is fixed so that the speed of the motor 41 is changed by changing the width of band. When the speed of the bicycle 1 changes, the counter 53 sends signals to the CPU via the A/D interface and the signals are processed by the CPU and then sent to the driving interface via the way of PWN. By this way, the PC control system controls the output power according to the load of the bicycle 1, such as the power is increased when the bicycle 1 moves uphill and reduced when the bicycle 1 moves downhill. A overload protection circuit monitors the operation of the motor 41 and obtains the voltage information of the battery 64 via a voltage detection interface, the information is then sent to the speed control mechanism 5 via I/O interface to avoid the battery 64 from over load or over charge.

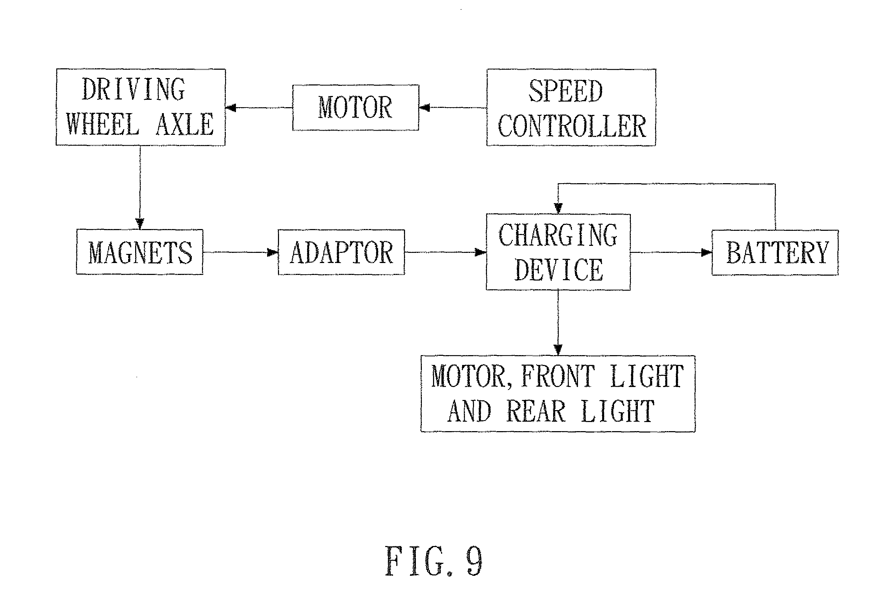

The bicycle 1 of the present invention can generate electric power during riding and the power is provided to the motor 41, the indication lights 513 and front and rear lights 191, 192. The surplus power can be stored in the battery 64. During riding, the magnets 611 on the front wheel 15 and the rear wheel 18 move and inducted with the induction members 612 on the front fork 11 and the seat stay 17, the cutting of the magnetic lines generates power. The faster the bicycle 1 moves, the larger the power is generated. The block diagram of the power generating and storage is disclosed in Fig. 9, the electric power generated from the induction member 612 is sent to the charging device 62 and the electric power is stored in the battery 64.

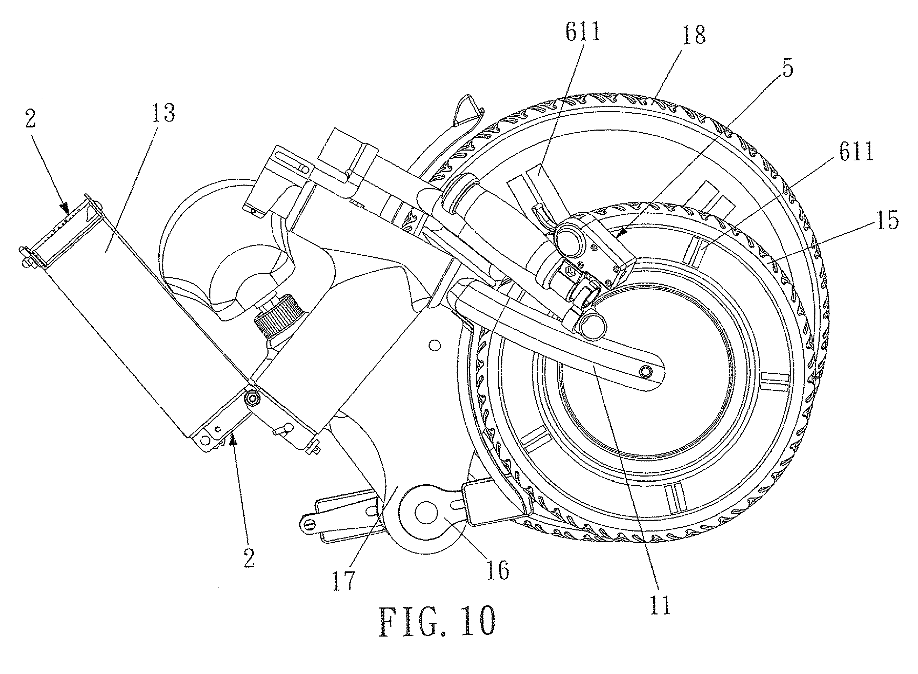

As shown in Fig. 10, the top tube 13 can be folded into three sections at the joints 2. The front and rear wheels 15, 18 can be easily replaced and installed to the bicycle 1, the user can choose desired sizes of the front and rear wheels 15, 18. The folded bicycle 1 is compact and convenient to be transported.

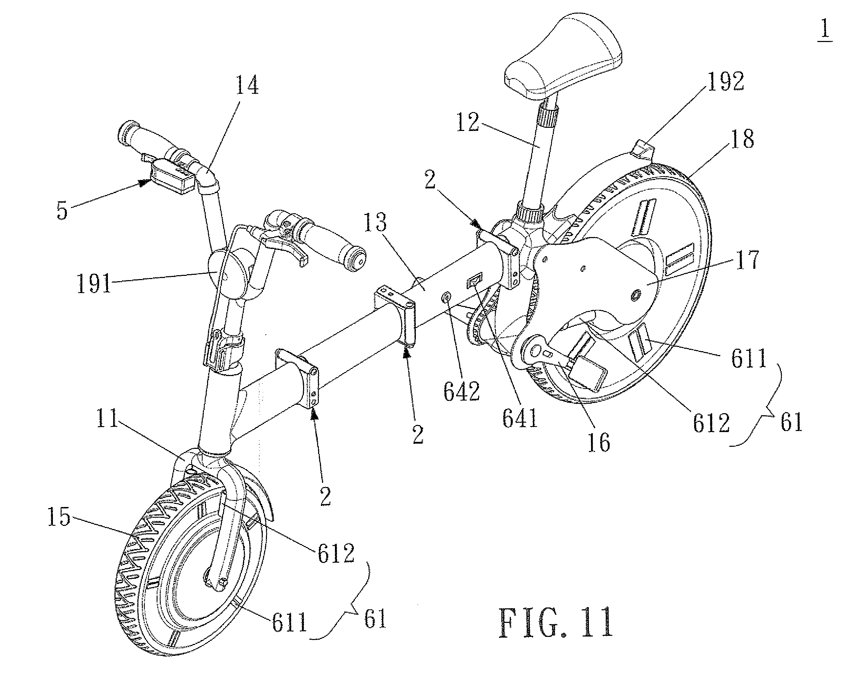

The structure of the bicycle 1 can also be used to scooter, golf cart or any other wheeled device. The speed control mechanism 5 can be controlled by wire-less method as shown in Fig. 11 by installing an emitting device and a receiving device (both not shown) are respectively connected to the speed controller 51 and the PC box 52.

The bicycle 1 saves the user's effort by employing the planet gear set 31 which allows the user to accelerate the bicycle 1 easily. The speed of the bicycle can be controlled when the bicycle 1 moves uphill or downhill by the speed control mechanism 5. Furthermore, the bicycle 1 generates electric power when it moves and the power provides the motor 41, the indication lights 513 and front and rear lights 191, 192. The surplus power can be stored in the battery 64.

While we have shown and described the embodiment in accordance with the present invention, it should be clear to those skilled in the art that further embodiments may be made without departing from the scope of the present invention.

## Claims

1. A bicycle comprising:
a front fork with a front wheel connected thereto, a handlebar connected to a top of the front fork, a top tube connected between the front fork and a seat tube in which a seat post is inserted, a seat stay connected to the seat tube and a rear wheel connected to the seat stay, multiple joints connected to the top tube which is foldable at the joints;
a rear wheel driving device including a planet gear set which is located in the rear wheel and includes a sun gear and multiple planet gears, the sun gear connected to a rear wheel axle which is connected to a driving gear on a bottom bracket, cranks connected to the driving gear, the planet gears engaged between the sun gear and a first ring gear, the first ring gear connected to the rear wheel and driving the rear wheel;
a front wheel driving device received in the front wheel and including a motor whose axis is perpendicular to a front wheel axle, an output shaft and a driving gear extending from two ends of the motor, the driving gear connected with two second ring gears located on two sides of the motor, the second ring gears connected to the front wheel and driving the front wheel;
a speed control mechanism including a speed controller, a PC box and a counter, the speed controller connected to the handlebar and includes a lever which controls variable resistances, indication lights and a circuit board, the PC box connected to a front end of the top tube and includes a PC control system which is connected with the circuit board and the counter, the counter located in the front wheel and corresponding to the output shaft of the motor, and
a generating and storage device includes two generating devices, a charging device, an adaptor and a battery, the generating devices connected to the front wheel and the rear wheel, each generating device including magnets which are arranged in radial direction, two pairs of induction members connected to the front fork and the seat stay respectively, and located corresponding to the magnets, the induction members connected to the charging device, the charging device and the adaptor located within a mediate portion of the top tube, and including a switch and a plug, the battery electrically connected to the motor.

2. The bicycle as claimed in claim 1, wherein the cranks are connected to a transmission device which includes a transmission belt and transmission gears.

3. The bicycle as claimed in claim 1, wherein a front light and a rear light are connected to a front end and a rear end of the bicycle respectively, the front light and the rear light are connected with the battery.
